# EUROPEAN PATENT SPECIFICATION

(11) **EP 2 151 155 B1**
(45) Date of publication and mention of the grant of the patent: **29.08.2012**
(21) Application number: 09166387.2
(22) Date of filing: 24.07.2009
(51) Int. Cl.: A01D 34/66

(54) **Improved front mower group for tractors**
Verbesserte Frontmähergruppe für Traktoren
Groupe de faucheuse avant améliorée pour tracteurs

(30) Priority: 04.08.2008 IT MI20081455
(43) Date of publication of application: 10.02.2010
(73) Proprietor: BCS S.p.A., 20123 Milano (MI) (IT)
(72) Inventor: Castoldi, Fabrizio, 20145, Milano MI (IT)
(74) Representative: Branca, Emanuela

(56) References cited:
- EP-A- 0 642 731
- EP-A- 0 876 748
- EP-A- 1 932 414
- DE-U1- 9 001 396

## Description

The present invention refers to an improved front mower group for tractors.

Such groups, which generally comprise disc or drummower/mower bars elements, are connected at the front of a tractor, or general agricultural machine and are associated with a front power drive of the tractor itself (see e.g. DE-U-9001396).

Usually the coupling occurs through the union of an element known as "frame", mounted onto the three-point attachment of the tractor, and another element known as mower support frame" fixed to the mower group.

The fundamental characteristic of such groups, in order to cut in the best way possible harvest grass or plants to be cut, is that of being able to adapt to possible undulations of the ground without either jeopardizing the cutting operations or damaging the ground or mower group itself. Indeed it is very important to prevent breaking/bending of the mechanical elements in the groups whenever obstacles are encountered during movement.

In particular, in order to adapt to the aforementioned undulations of the ground, the mowers known today, comprise mower movement and suspension kinematisms which, when encountering an uphill climb or an obstacle, allow the mower to rise and simultaneously tilt it so as to keep the cutting height as constant as possible even during such an initial uphill portion.

Similarly, thanks to suchkinematisms, during a downhill slope the mower can lower itself and tilt forwards to follow the sloping profile of the ground.

In general, the kinematisms known today, which allow such movements summarized above, comprise a support frame, from which the mower is suspended, an upper frame, usually connected to the lower one through articulated quadrilaterals, and motion transmission means from the tractor power drive to the mower.

In particular, in all machines known today, the aforementioned motion transmission means comprise an angle transmission which on one side receives a Cardan shaft, associated with the power drive of the tractor and, on another side, is connected to a transverse shaft, which through a lateral transmission case, sends the motion to the mower.

However, such known machines described above, although working very well in flat ground conditions, have substantial drawbacks when a user must deal with a rough ground or obstacles.

Such drawbacks derive from the fact that today, the aforementioned central transmission is usually rigidly fixed to the lower frame that supports the mower, and therefore, during work on uneven ground in which the mower is subject to movement, such a transmission, is also consequently forced to move.

When the machine is in use, since the Cardan shaft tends to behave like a sprag, limiting longitudinal shifting to a minimum, due to the substantial powers and torques involved, both the central transmission and the mower connected to it, are fastened by suitable kinemeatisms so as to only be able to carry out a rotational movement around a attachment point behind the Cardan.

Such allowed movements in machines known today are schematically shown in figures A-C in which it can be seen how starting from a straight motion configuration (figure A), in which the Cardan is substantially horizontal, the mower whilst running uphill or downhill is forced to make circumference arcs so as to keep the length of the Cardan shaft constant.

Such an aspect is extremely disadvantageous, as well as dangerous for the mower itself, whenever known machines face an uphill climb or an obstacle.

Indeed, as shown in figure B, in machines used today, an upwards movement of the mower necessarily also causes a forward movement of the mower itself which, in case of an obstacle, not only does it not help to overcome the obstacle, on the contrary, it tends to force the mower even more into the obstacle encountered.

Indeed, it is a common occurrence, for such known machines, when taking on such an uphill climb, at least initially, to scrape the ground due to this exact forwardmovement necessary to lift the mower.

It is thus clear that these known machines are disadvantageous in view of the fact that when impacting against an obstacle, the mower cannot help but force itself against it even more. Moreover, disadvantageously, such a kinematism which tends to force the mower towards the ground causes a further weight that needs to be overcome in supporting the mower itself, due to the resistance of the forward movement induced by the friction with the ground.

It is indeed known that the mower must not excessively bear upon the ground and must be suitably lightened, generally through springs.

Finally, it should be seen how, in known machines, during downhill motion/ approach to a descent, the mower is not reactive but tends to pull back as shown in figure C.

The purpose of the present invention is that of making an improved front mower group for tractors able to overcome the aforementioned drawbacks of the prior art in an extremely simple, cost-effective and particularly functional way.

Another purpose is that of making an improved front mower group for tractors which allows an uphill climb to be taken on without scraping the ground.

Another purpose is that of making an improved front mower group for tractors which when impacting against an obstacle does not force the mower even further against it, but protects itself.

Another purpose is that of making an improved front mower group for tractors that is able to lighten itself thanks to the resistance to forward movement induced by the friction between the mower and the ground.

Another purpose is that of making an improved front mower group for tractors in which during the lifting of the mower it is forced to also carry out a tilting movement and a simultaneous backward movement.

Yet another purpose is that of being able to have an improved front mower group for tractors, in which, in case a downhill ground is being taken on, the mower rapidly lowers, immediately hitting and moving forward on the ground.

These purposes are achieved according to the present invention by making an improved front mower group for tractors as outlined in claim 1.

Further characteristics of the invention are highlighted in the subsequent claims.

The characteristics and the advantages of an improved front mower group for tractors according to the present invention shall become clearer from the following description, given as an example and not for limiting purposes, with reference to the attached schematic drawings, in which:
- figures A-C are side views of known front mower groups during different operating steps;
- figure 1 is a schematic perspective side view of an improved front mower group for tractors according to the present invention;
- figure 1b is a side view of the improved front mower group of figure 1;
- figure 1c is a top perspective view of the improved front mower group of figure 1;
- figure 1d is a top view of the improved front mower group of figure 1;
- figure 2 is a schematic side perspective view of a section of the improved front mower group of figure 1;
- figure 2b is a side view of the improved front mower group of figure 2;
- figures 3-3c are side views of the improved front mower group of figure 1 during different operating steps;
- figure 4 represents a sequence of allowed movements of the improved front mower group for tractors according to the present invention;
- figures 5-5c are top views of the improved front mower group of figure 1 during different operating steps of figures 3-3c.

With reference to the figures, an improved front mower group for tractors according to the present invention is shown with 10.

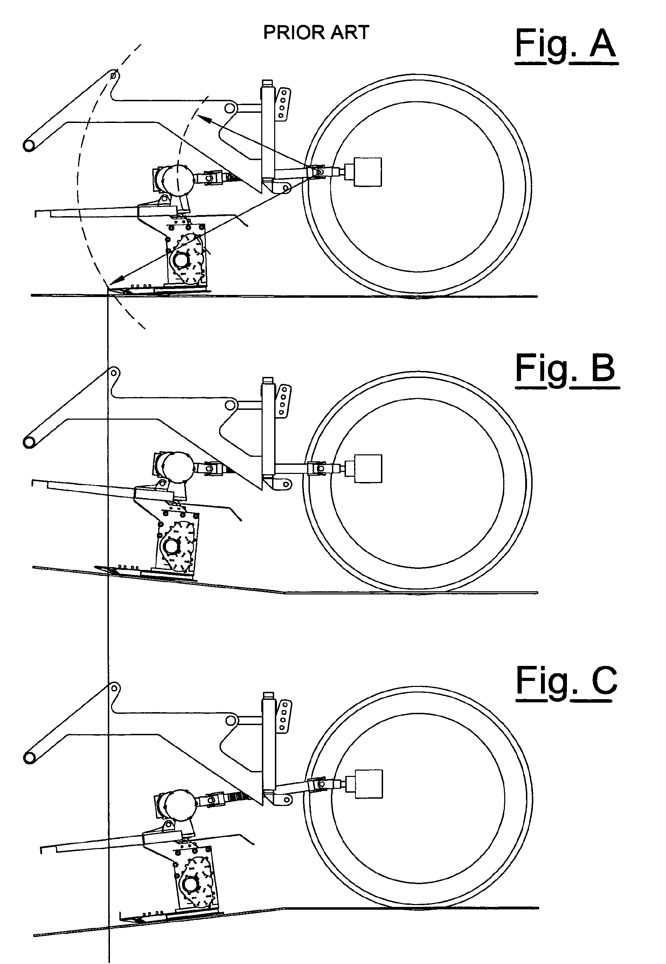

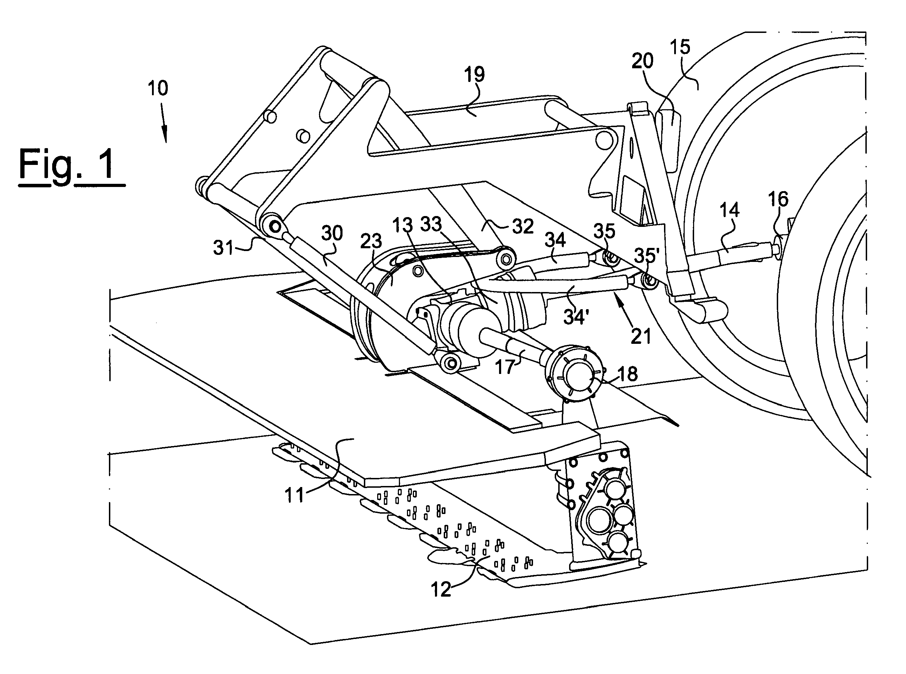

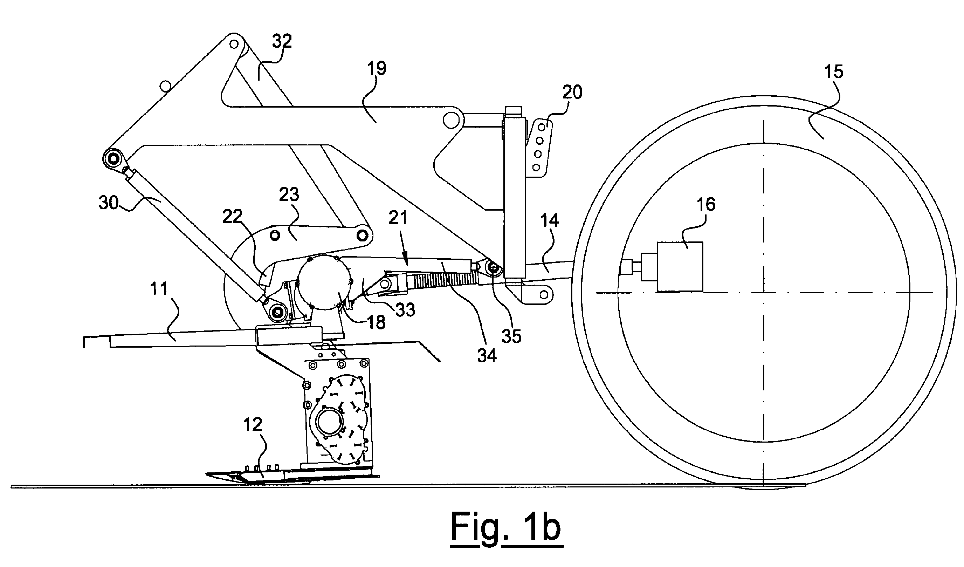

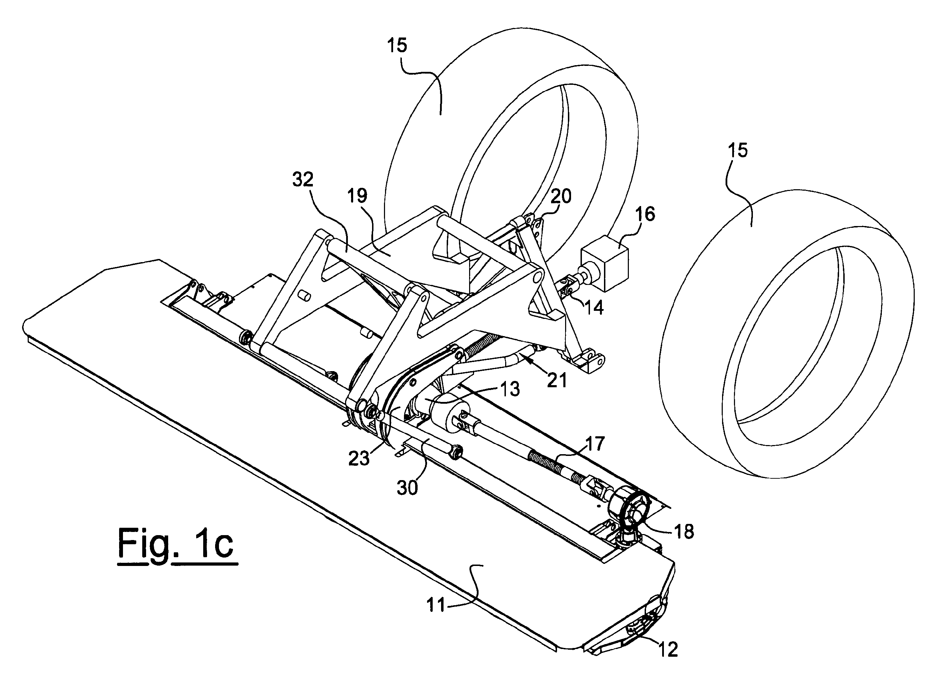

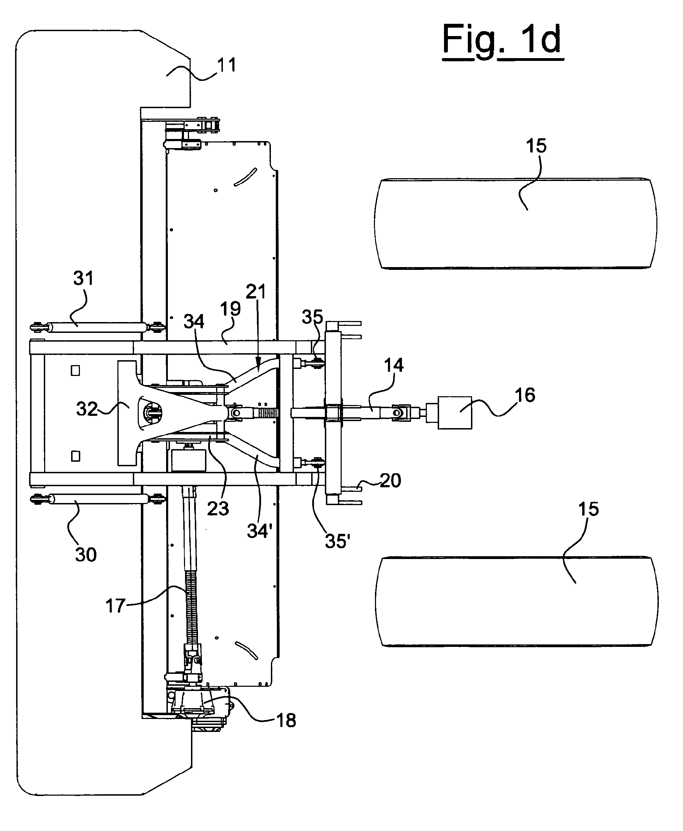

Such a mower group 10, schematically visible in various views in figures 1-1d, is of the type able to be connected to the front of a tractor 15, schematically shown by two wheels, from which it takes power at a front power drive 16.

As can be seen in the figures, the aforementioned mower group 10 comprises a support frame 11 and a mower 12, generally connected in a rigid manner, below the support frame 11. For transmitting motion to the mower 12 it is foreseen to have an angle transmission 13 of the motion coming from a Cardan shaft 14 connected to the mentioned front power drive 16 of the tractor 15.

At the side of the angle transmission 13 a transverse shaft 17 is arranged, which is around half the length of the mower 12, said transverse shaft 17 terminating at a lateral transmission case 18 connected to the mower 12.

Above the support frame 11 there is an upper frame 19 shaped at the rear so as to be able to be connected to a three-point attachment 20 of the tractor 15.

Once mounted, the upper frame 19 is fixedly connected to the tractor 15.

Between the upper frame 19 fixedly connected to the tractor 15 and the support frame 11 which supports the mower, movable connection means 30, 31, 32 are foreseen, so as to allow the mower 12 to make certain movements with respect to the upper frame 19 and therefore to the tractor 15.

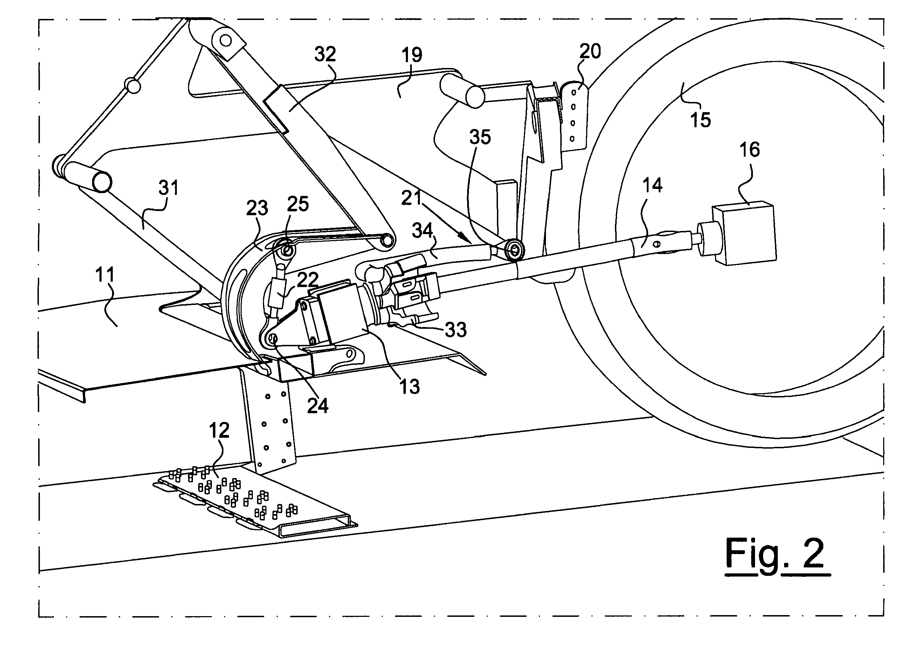

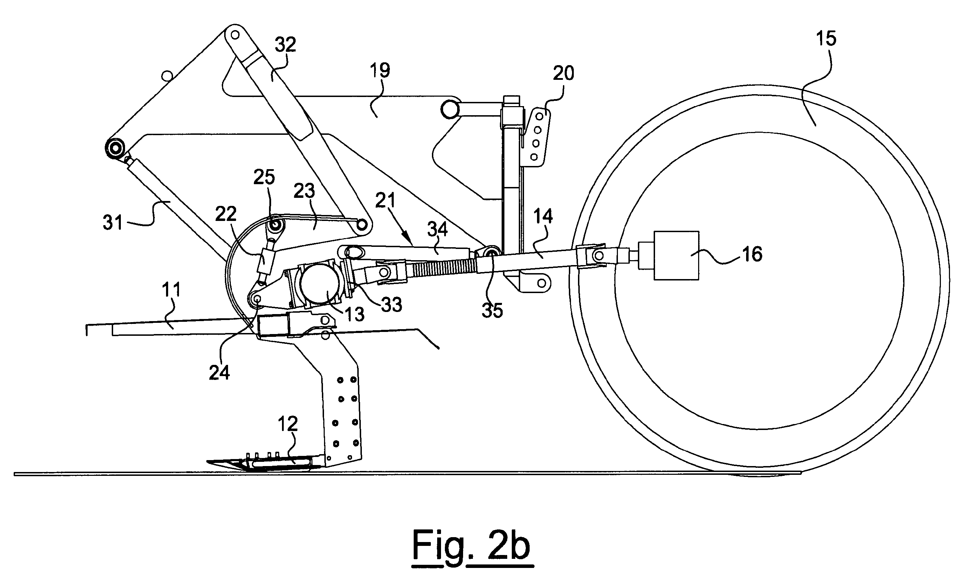

In particular, according to the invention, as visible in figures 2-2b, the angle transmission 13 is not connected directly to the support frame 11, but is respectively held up by a movable support 21, hinged to the upper frame 19 fixedly connected to the tractor 15, and hinged at a first end 24 of a rod element 22.

As shown, such a rod element 22 also comprises a second end 25 hinged to a portion, generally projecting at the top 23, of the support frame 11.

Both ends 24 and 25 of the rod element 22 can rotate around relative horizontal axes, perpendicular to the forward movement of the tractor 15.

According to a first preferred embodiment, the movable support 21 comprises a first front end 33, which is associated with the angle transmission 13, and a rear portion equipped with two arms 34, 34' arranged laterally and symmetrically with respect to the Cardan shaft 14.

In particular such two arms 34, 34', which prevent lateral movements of the Cardan 14, have joints 35, 35', which allow rotation around a horizontal axis, perpendicular to the forward movement of the tractor 15 or to the three-point attachment 20 or to a rear portion of the upper frame 19. In the embodiment shown in figures 2-2b the portion projecting at the top 23, which is generally in a single piece with said support frame 11 and with the mower 12, is C-shaped and comprises a first lower end connected to an upper portion of the support frame 11 and a second upper end hinged to the second end 25 of the rod element 22.

According to a preferred embodiment such rod element 22, can also be of the type able to be extended in a telescopic manner, as can the movable support 21 and the Cardan shaft 14 and/or the transverse shaft 17 be extensible.

Again, according to the example shown in the figures, the movable connection means 30, 31, 32 of the support frame 11, with the upper frame 19 fixed to the tractor 15, can comprise at least one articulated quadrilateral 30, 31.

Indeed in the embodiment shown, there are two shafts 30, 31 hinged above the upper frame 19 and below the support frame 11, respectively.

Moreover, a further V-shaped rod element 32 is foreseen, suitable for preventing lateral movements of the group 10, in which the end with the reduced size is hinged to a rear extension of the second upper end of the C-shaped portion 23, whereas, the end with greater size is hinged to the upper frame 19.

In order to lighten the overall weight of the support frame 11 and of the mower 12, or rather the weight of the portions suspended from the upper frame 19, which must suitably be reduced to not excessively bear upon the ground to be worked on, at least one lightening spring element, not shown, is foreseen.

It is absolutely easy to understand what is the function of the device object of the invention.

The mower group 10, according to the invention, comprises a support frame 11, a mower 12 connected below the support frame 11 and an upper frame 19, the rear of which is able to be connected to a three-point attachment 20 of the tractor 15.

The upper frame 19 supports the support frame 11 through movable connection means 30, 31, 32 such as an articulated quadrilateral.

To transmit motion to the mower 12, there is an angle transmission 13 of the motion coming from a Cardan shaft 14, connected to a front power drive 16 of a tractor 15, and a transverse shaft 17 connected at one end to the angle transmission 13 and at another end to a lateral transmission case 18 laterally connected to the mower 12.

In particular the angle transmission 13 is connected on one side to a movable support 21, hinged at its rear portion to the upper frame 19, and on another side it is hinged to a first end 24 of the rod element 22.

Such a rod element 22 is in turn hinged at its second end 25 to a portion projecting at the top 23 of the support frame 11.

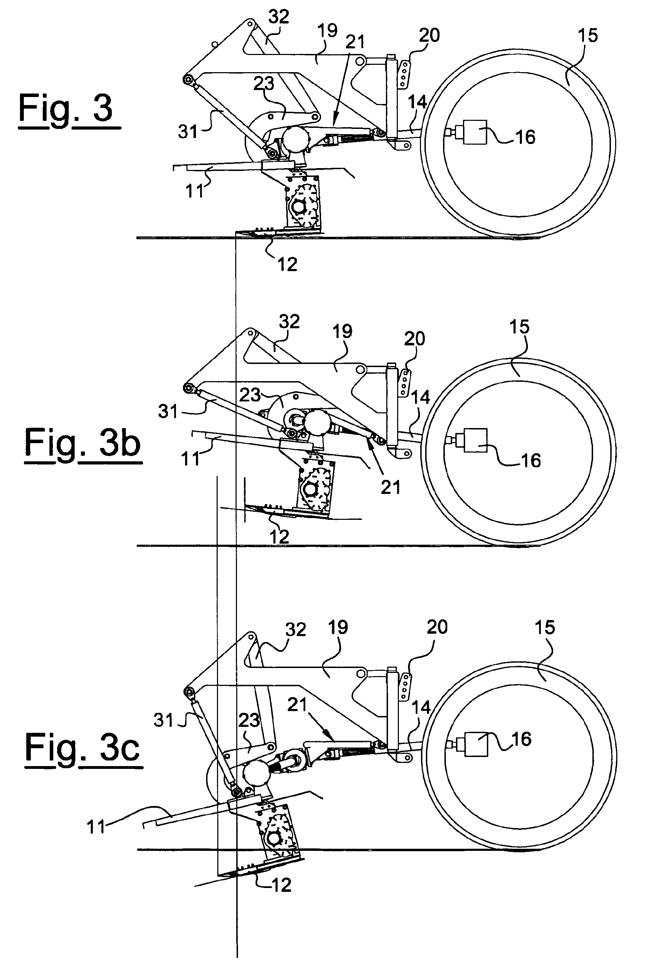

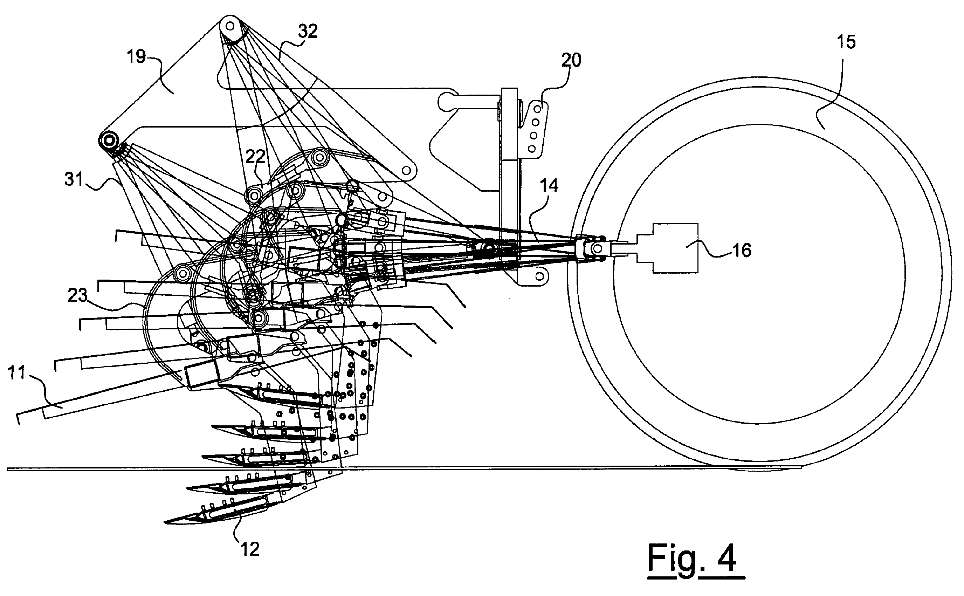

As shown in the sequences given in figures 3-3c and 4, thanks to couplings described above, during a rising of the mower 12, the latter carries out a backward movement protecting itself in the case of a possible impact against an obstacle or against the start of an uphill climb.

Advantageously, therefore, at the start of an uphill climb or when there is an obstacle, figure 3b, the mower 12 will back up, not further forcing on the aforementioned climb or obstacle, and at the beginning of a descent, figure 3c, the mower 12 will promptly be lowered in a forward movement keeping the cutting height constant.

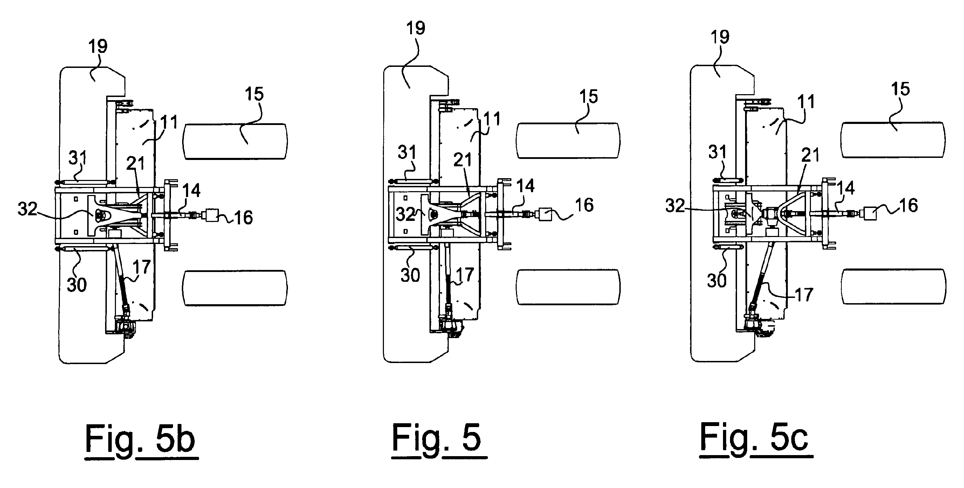

As also visible in figures 5-5c, the backward movements of the mower 12 generated uphill, and forward movements of the mower during movements in downhill, are also accompanied by the rotation of the transverse Cardan 17.

It has thus been seen that an improved front mowing group for tractors according to the present invention, achieves the purposes previously highlighted.

Indeed, the improved front mowing group, according to the present invention allows an uphill climb to be tackled without scraping the ground and an obstacle to be overcome whilst protecting itself, without forcing the mower further against the obstacle itself.

Moreover, the improved front mower group according to the present invention achieves self lightening of the mower while moving forwards on the ground.

Such advantages are achieved thanks to the particular kinematism connected to the mower, for which reason, during the rising of the mower it is forced to carry out a backward movement and during the lowering, a forward movement.

During these movements, the Cardan shafts do not substantially vary their length and are not a constraint to the movements themselves.

The improved front mower group for tractors of the present invention thus conceived can undergo numerous modifications and variants, all covered by the same inventive concept; moreover, all the details can be replaced by technically equivalent elements. In practice the materials used, as well as their sizes, can be whatever according to the technical requirements.

## Claims

1. Front mower group (10) for tractors comprising a support frame (11), a mower (12) connected below said support frame (11), an angle transmission (13) of the motion coming from a Cardan shaft (14) connected to a front power drive (16) of a tractor (15), a transverse shaft (17) connected at one end to said angle transmission (13) and at another end to a lateral transmission case (18) connected to the side of said mower (12), said mower group (10) moreover comprising an upper frame (19) connectable at its rear portion to a three-point attachment (20) of said tractor (15) , said support frame (11) being connected at its upper part, in a movable manner, to said upper frame (19) integral with said tractor (15) by means of movable connection means (30, 31, 32), **characterised in that** said angle transmission (13) is connected to a movable support (21), hinged to said upper frame (19), and is frontally hinged to a first end (24) of connecting rod element (22), said connecting rod element (22) comprising a second end (25) hinged to a portion (23) projecting on the upper part of said support frame (11).

2. Mower group (10) according to claim 1, **characterised in that** said movable support (21) is provided with a first front end (33) associated with said angle transmission (13) and with a front portion comprising two arms (34, 34') arranged laterally and symmetrically with respect to said Cardan shaft (14), said two arms (34, 34') being hinged (35, 35') either to said three-point attachment (20) or to a rear portion of said upper frame (19).

3. Mower group (10) according to claim 1, **characterised in that** said portion projecting on the upper part (23) is C-shaped, wherein a first lower end of said C-portion (23) is connected to an upper end of said support frame (11) and a second upper end of said C-shaped portion (23) being hinged to said second end (25) of said connecting rod (22).

4. Mower group (10) according to claim 1, **characterised in that** said connecting rod (22) is of the type that can be extended in a telescopic manner.

5. Mower group (10) according to claim 3, **characterised in that** said C-portion (23) is integral with said support frame (11) and with said mower (12).

6. Mower group (10) according to claim 1, **characterised in that** said movable means (30, 31, 32) for connecting said support frame (11) with said upper frame (19) integral with said tractor (15) comprise an articulated quadrilateral (30, 31).

7. Mower group (10) according to claim 6, **characterised in that** said movable connection means (30, 31, 32) comprise a further V-shaped connecting rod element (32) wherein the end with reduced size is hinged to a rear extension of the second upper end of said C-portion (23) and wherein the end with greater size is hinged to said upper frame (19).

8. Mower group (10) according to claim 1, **characterised in that** it comprises at least one spring or other elastic system for lightening the overall weight of said support frame (11) and said mower suspended under said upper frame (19).

9. Mower group (10) according to claim 1, **characterised in that** said movable support (21) is of extendible type.

10. Mower group (10) according to claim 1, **characterised in that** said Cardan shaft (14) and/or said transverse shaft (17) are of extendible type.

## Patentansprüche

1. Frontmähwerk (10) für Traktoren, das einen Tragrahmen (11), einen unterhalb des Tragrahmens (11) angeschlossenen Mäher (12), ein Winkelgetriebe (13) für die von einer mit einem Frontkraftantrieb (16) eines Traktors (15) verbundenen Kardanwelle (14) kommende Bewegung und eine Querwelle (17) umfasst, die an einem Ende an dieses Winkelgetriebe (13) und an einem anderen Ende an ein seitliches Getriebegehäuse (18) angeschlossen ist, das mit der Seite des Mähers (12) verbunden ist, wobei dieses Mähwerk (10) ferner einen oberen Rahmen (19) umfasst, der in seinem hinteren Bereich mit einem Dreipunktanbau (20) des Traktors (15) verbunden werden kann, wobei der Tragrahmen (11) auf seiner Oberseite mit Hilfe von beweglichen Verbindungsmitteln (30, 31, 32) beweglich mit dem fest an den Traktor (15) angebauten oberen Rahmen (19) verbunden ist, **dadurch gekennzeichnet, dass** das Winkelgetriebe (13) mit einem an den oberen Rahmen (19) angelenkten beweglichen Träger (21) verbunden und vorderseitig an ein erstes Ende (24) eines Verbindungsstangenelements (22) angelenkt ist, wobei das Verbindungsstangenelement (22) ein zweites Ende (25) umfasst, das an einen auf der Oberseite des Tragrahmens (11) vorstehenden Teil (23) angelenkt ist.

2. Mähwerk (10) nach Anspruch 1, **dadurch gekennzeichnet, dass** der bewegliche Träger (21) mit einem ersten vorderen Ende (33) versehen ist, das mit dem Winkelgetriebe (13) und mit einem vorderen Teil verbunden ist, der zwei Arme (34, 34') umfasst, die seitlich von und symmetrisch zu der Kardanwelle (14) angeordnet sind, wobei diese zwei Arme (34, 34') entweder an den Dreipunktanbau (20) oder an einen hinteren Teil des oberen Rahmens (19) angelenkt (35, 35') sind.

3. Mähwerk (10) nach Anspruch 1, **dadurch gekennzeichnet, dass** der auf der Oberseite vorstehende Teil (23) C-förmig ist, wobei ein erstes unteres Ende dieses C-förmigen Teils (23) mit einem oberen Ende des Tragrahmens (11) verbunden ist und ein zweites oberes Ende dieses C-förmigen Teils (23) an das zweite Ende (25) der Verbindungsstange (22) angelenkt ist.

4. Mähwerk (10) nach Anspruch 1, **dadurch gekennzeichnet, dass** die Verbindungsstange (22) des Typs ist, der teleskopisch verlängert werden kann.

5. Mähwerk (10) nach Anspruch 3, **dadurch gekennzeichnet, dass** der C-förmige Teil (23) einstückig mit dem Tragrahmen (11) und dem Mäher (12) ist.

6. Mähwerk (10) nach Anspruch 1, **dadurch gekennzeichnet, dass** die beweglichen Mittel (30, 31, 32) zum Verbinden des Tragrahmens (11) mit dem fest an den Traktor (15) angebauten oberen Rahmen (19) ein gelenkiges Viereck (30, 31) umfassen.

7. Mähwerk (10) nach Anspruch 6, **dadurch gekennzeichnet, dass** die beweglichen Verbindungsmittel (30, 31, 32) ferner ein V-förmiges Verbindungsstangenelement (32) umfassen, wobei das Ende mit der verringerten Größe an eine hintere Verlängerung des zweiten oberen Endes des C-förmigen Teils (23) angelenkt ist und wobei das Ende mit der größeren Größe an den oberen Rahmen (19) angelenkt ist.

8. Mähwerk (10) nach Anspruch 1, **dadurch gekennzeichnet, dass** es mindestens eine Feder oder ein anderes elastisches System zum Erleichtern des Gesamtgewichts des Tragrahmens (11) und des Mähers umfasst, die unter dem oberen Rahmen (19) aufgehängt sind.

9. Mähwerk (10) nach Anspruch 1, **dadurch gekennzeichnet, dass** der bewegliche Träger (21) des ausziehbaren Typs ist.

10. Mähwerk (10) nach Anspruch 1, **dadurch gekennzeichnet, dass** die Kardanwelle (14) und/oder die Querwelle (17) des ausziehbaren Typs sind.

## Revendications

1. Groupe de faucheuse avant (10) pour tracteurs comprenant un cadre de support (11), une faucheuse (12) reliée en dessous dudit cadre de support (11), un renvoi d'angle (13) du mouvement provenant d'un arbre à cardan (14) relié à une commande mécanique avant (16) d'un tracteur (15), un arbre transversal (17) relié à une extrémité audit renvoi d'angle (13) et à une autre extrémité à un boîtier de transmission latéral (18) relié au côté de ladite faucheuse (12), ledit groupe de faucheuse (10) comprenant en outre un cadre supérieur (19) pouvant être relié en correspondance de sa partie arrière à un attelage trois points (20) dudit tracteur (15), ledit cadre de support (11) étant relié en correspondance de sa partie supérieure, de manière mobile, audit cadre supérieur (19) solidaire avec ledit tracteur (15) par des moyens de raccordement mobiles (30, 31, 32), **caractérisé en ce que** ledit renvoi d'angle (13) est relié à un support mobile (21), articulé audit cadre supérieur (19), et est articulé frontalement à une première extrémité (24) d'un élément de bielle (22), ledit élément de bielle (22) comprenant une seconde extrémité (25) articulée à une partie (23) en saillie sur la partie supérieure dudit cadre de support (11).

2. Groupe de faucheuse (10) selon la revendication 1, **caractérisé en ce que** ledit support mobile (21) est pourvu d'une première extrémité avant (33) associée audit renvoi d'angle (13) et d'une partie avant comprenant deux bras (34, 34') disposés latéralement et symétriquement par rapport audit arbre à cardan (14), lesdits deux bras (34, 34') étant articulés (35, 35') soit audit attelage trois points (20), soit à une partie arrière dudit cadre supérieur (19).

3. Groupe de faucheuse (10) selon la revendication 1, **caractérisé en ce que** ladite partie en saillie sur la partie supérieure (23) est en forme de C, où une première extrémité inférieure de ladite partie en forme de C (23) est reliée à une partie supérieure dudit cadre de support (11) et une seconde extrémité supérieure de ladite partie en forme de C (23) étant articulée à ladite seconde extrémité (25) dudit élément de bielle (22).

4. Groupe de faucheuse (10) selon la revendication 1, **caractérisé en ce que** ladite bielle (22) est du type qui peut s'étirer de manière télescopique.

5. Groupe de faucheuse (10) selon la revendication 3, **caractérisé en ce que** ladite partie en C (23) est solidaire avec ledit cadre de support (11) et avec ladite faucheuse (12).

6. Groupe de faucheuse (10) selon la revendication 1, **caractérisé en ce que** lesdits moyens mobiles (30, 31, 32) pour relier ledit cadre de support (11) avec ledit cadre supérieur (19) solidaire avec ledit tracteur (15) comprennent un quadrilatère articulé (30, 31).

7. Groupe de faucheuse (10) selon la revendication 6, **caractérisé en ce que** lesdits moyens de raccordement mobiles (30, 31, 32) comprennent un ultérieur élément de bielle en forme de V (32) où l'extrémité de taille réduite est articulée à un prolongement arrière de la seconde extrémité supérieure de ladite partie en C (23) et où l'extrémité de plus grande taille est articulée audit cadre supérieur (19).

8. Groupe de faucheuse (10) selon la revendication 1, **caractérisé en ce qu'**il comprend au moins un ressort ou autre système élastique pour alléger le poids total dudit cadre de support (11) et de ladite faucheuse suspendue en dessous dudit cadre supérieur (19).

9. Groupe de faucheuse (10) selon la revendication 1, **caractérisé en ce que** ledit support mobile (21) est de type extensible.

10. Groupe de faucheuse (10) selon la revendication 1, **caractérisé en ce que** ledit arbre à cardan (14) et/ou ledit arbre transversal (17) sont de type extensible.
